# EUROPEAN PATENT APPLICATION

(11) **EP 3 875 006 A1**
(43) Date of publication of application: **08.09.2021**
(21) Application number: 21157970.1
(22) Date of filing: 18.02.2021
(51) Int. Cl.: A47J 42/38

(54) **MILL**

(30) Priority: 06.03.2020 ES 202030412 U
(71) Applicant: Proyectos Y Ejecuciones, S.A., 03430 Onil (Alicante) (ES)
(72) Inventor: Verdú Francés, José, 03430 Onil (Alicante) (ES)
(74) Representative: Ibarra Garcia, Isabel

(57) **Abstract**

The invention discloses a mill formed by a plastic rotating part, a high-hardness rotating part, a high-hardness stationary gear, and a plastic stationary part, such that the high-hardness rotating part and the high-hardness stationary gear are provided with a plurality of teeth complementary to one another for the grinding function. The high-hardness gear and the plastic stationary part advantageously have locking means enabling an automatic assembly of the mill, since the mentioned elements are able to easily rest relative to one another in the suitable position and fit together effortlessly.

## Description

### TECHNICAL FIELD

The present invention relates to a mill formed by four elements, where two of them form the rotating portions that rest on the other two forming the stationary portions.

The object of the invention is to enable the elements responsible for grinding spices, namely one of the rotating parts and the stationary gear, being made of high-strength materials and, therefore, having a nature that is different from the plastic material from which the remaining elements forming the mill are made.

The configuration of the elements forming the mill of the invention advantageously allows an automated assembly during manufacture, resulting in an adjustable or non-adjustable grinder.

### BACKGROUND OF THE INVENTION

Mills formed by a larger number of parts, where those elements strictly intended for grinding are made of a high-strength material, are well known today.

The relevant drawback that mills of this type have resides in the fact that the coupling between the parts is performed by means of a stud, commonly known as a screw, which transversely keeps the large number of parts forming it attached to one another, which allows adjusting or not adjusting the grinder. Mills of this type are known as screw mills. The manufacture of screw mills is therefore very laborious and complex, requiring an assembly integrating a large number of steps that are hard-pressed to automate.

Based on the foregoing, the applicant of the present utility model application has detected the need to develop a mill that offers a viable solution for the manufacture and automatic assembly thereof and that allows incorporating a grinder essentially made up of elements made from a high-strength material.

### DESCRIPTION OF THE INVENTION

The mill proposed in the present invention allows solving the drawbacks set forth above, offering a configuration made up of a small number of elements characterized by their technical simplicity and very efficient assembly.

The mill is thereby essentially made up of four elements, i.e., a plastic rotating part, a high-hardness rotating part, a high-hardness stationary gear, and a plastic stationary part.

In this sense, the elements involved in the grinding process are formed by a highly abrasionresistant material. The mentioned materials are highly advantageous for forming the high-hardness rotating part and the stationary gear with respect to a polymeric material, given that plastics have a low resistance to mechanical actions and readily become worn during use.

The plastic rotating part has a raised area, arranged in the central portion of its base; said central portion has support means which will be in contact with at least complementary support means present on the inner surface of the high-hardness rotating part. As a result of the support means, the plastic rotating part does not rotate with respect to the high-hardness rotating part.

Moreover, the gear has locking means on its outer surface facing complementary locking means included in the plastic stationary part, such that when the gear rests on the plastic stationary part, the mentioned support means prevent the rotation of one element with respect to the other.

Additionally, the plastic rotating part has anchoring elements, preferably made up of projections, on its inner surface for coupling thereof to the plastic stationary part, thereby generating the complete association of the four elements forming the mill of the invention.

The high-hardness rotating part thereby has on its outer surface at least a plurality of teeth, with a preferred blade-like configuration, facing a plurality of teeth present on the inner surface of the high-hardness gear oriented in the opposite direction. Grinding of the spices as they go through a clearance present between the high-hardness rotating part and the high-hardness stationary gear when these elements are coupled to one another is thereby favored.

Finally, it should be pointed out that the technical configuration of the elements forming the mill favors its automated assembly, where specifically the high-hardness elements make the developed mill suitable for continued use, where it is even possible to reload the spices it contains, assuring a grinding to the degree required by the consumer.

### BRIEF DESCRIPTION OF THE DRAWINGS

To complement the description that will be provided below and for the purpose of helping to better understand the features of the invention according to a preferred practical embodiment thereof, a set of drawings is attached as an integral part of said description, in which the following has been depicted in an illustrative and non-limiting manner:
Figure 1 shows an exploded view of the elements forming the mill according to the preferred embodiment of the invention, where the view is taken from a lower angle to show the inner portion of the plastic rotating part and the plastic stationary part.
Figure 2 shows an exploded view of the mill depicted in Figure 1, where the view is taken from a higher angle.
Figure 3 shows a perspective view of the assembly formed by the plastic rotating part and the high-hardness rotating part forming the mill.
Figure 4 shows a perspective view of the plastic rotating part.

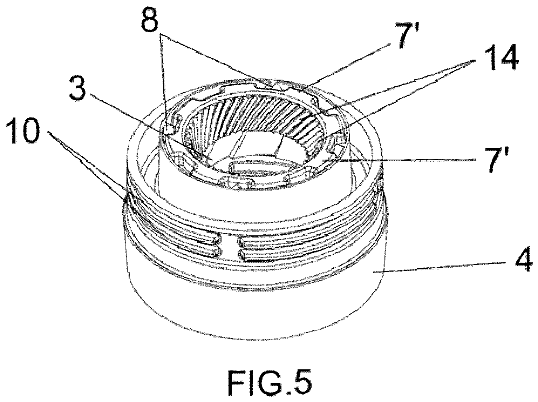

Figure 5 shows a perspective view of the assembly formed by the high-hardness stationary gear and the plastic stationary part forming the mill.

### PREFERRED EMBODIMENT OF THE INVENTION

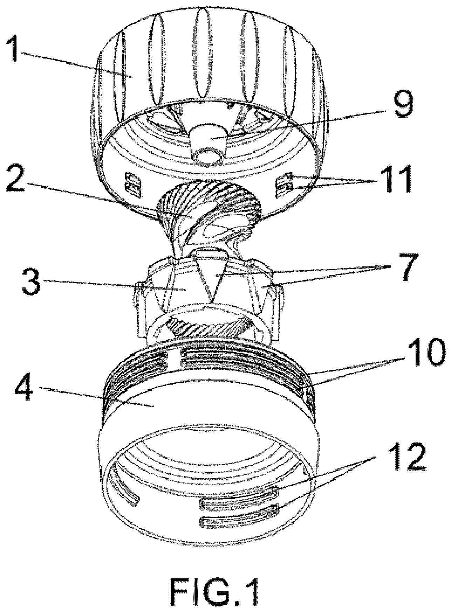

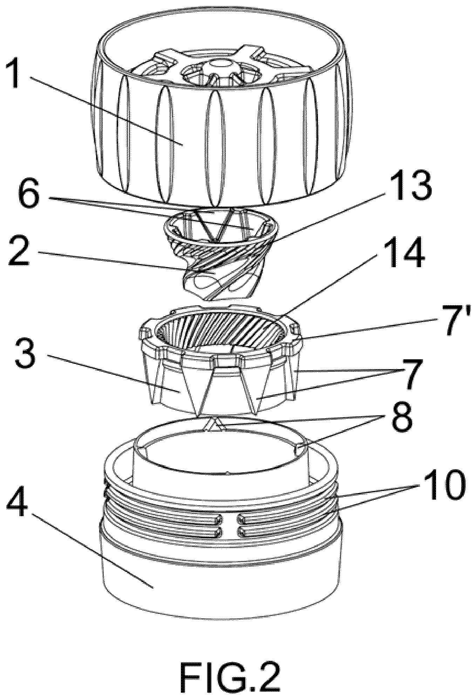

The preferred embodiment of the invention is depicted in view of the mentioned figures. Namely, it can be seen in Figures 1 and 2 that the mill of the invention is essentially formed by four elements, namely a plastic rotating part (1), a high-hardness rotating part (2), a high-hardness stationary gear (3), and a plastic stationary part (4).

It should be pointed out that the high-hardness rotating part (2) and the high-hardness stationary gear (3) are preferably formed from a ceramic material. Nevertheless, said parts can also be made from other high-hardness materials such as methacrylate, polycarbonate, or metal.

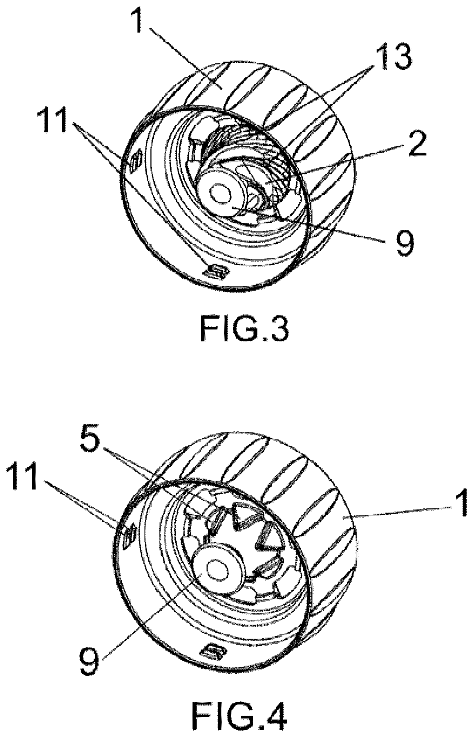

It can thereby be observed in Figures 1 and 3 that the plastic rotating part (1) is provided with anchoring elements (11), preferably made up of projections, on its inner surface, and support means (5) emerging from the inner central portion of the plastic rotating part (1).

In this sense, the high-hardness rotating part (2) is provided with complementary support means (6) to enable resting on the support means (5) of the plastic rotating part (1), thereby preventing the rotation of one rotating part with respect to the other.

In this sense, it is also necessary for the high-hardness rotating part (2) to be associated with the plastic rotating part (1), without one being able to separate from the other during grinding. To that end, the high-hardness rotating part (2) rests on the support means (5) arranged in the central portion of the plastic rotating part (1), and the separation between them is additionally prevented by the presence of a stop (9), which is preferably made up of a barrierlike rivet for preventing the disengagement of the high-hardness rotating part (2) with respect to the plastic rotating part (1).

As can be observed in Figures 2 and 4, the support means (5) arranged in the central portion of the plastic rotating part (1) and the complementary support means (6) arranged on the inner surface of the high-hardness rotating part (2) are preferably formed by an arrowhead-like configuration. The presence of the mentioned support means with a surface having an arrowhead-like configuration advantageously enables surfaces being supported on other surfaces in a complementary manner when the high-hardness rotating part (2) rests on the plastic rotating part (1), generating a complete fit and coupling between them which prevents the rotation of one element with respect to the other. To that end, it is necessary for the arrowhead-like configuration to be arranged with an opposite orientation between parts in order to allow one part to pass over the other while they are being coupled together.

It should be pointed out that the mill of the invention has complementary anchoring elements (10), preferably made up of guiding means, located on the outer surface of the plastic stationary part (4), such that when the plastic rotating part (1) is coupled with the plastic stationary part (4), the anchoring elements (11) present on the inner surface of the plastic rotating part (1) pass over the complementary anchoring elements (10).

It can be observed in Figures 1 and 4 that the high-hardness stationary gear (3) has locking means (7) on the outer surface and a central cavity.

Namely, the locking means (7) present in the high-hardness stationary gear (3) rest on complementary locking means (8) present in the plastic stationary part (4) for the purpose of preventing the rotation of one element with respect to the other.

It can thereby be observed in Figures 1 and 2 that the locking means (7) arranged on the outer surface of the high-hardness stationary gear (3) and the complementary locking means (8) of the plastic stationary part (4) preferably have an arrowhead-like configuration arranged with an opposite orientation to enable them passing over each other.

It should be pointed out that the arrowhead-shaped configuration of the support means (5) and (6) and of the locking means (7) and (8) enables an automatic assembly of the mill, since the mentioned elements are able to easily rest relative to one another in the suitable position and fit together effortlessly.

Likewise, the locking means (7) present in the high-hardness stationary gear (3) preferably include a double stop (7') extending along the perimeter of its upper base to facilitate the coupling and locking between the high-hardness stationary gear (3) and the plastic stationary part (4).

It must be stressed that the high-hardness rotating part (2) has a plurality of teeth (13) on its outer surface, whereas the high-hardness stationary gear (3) has a plurality of teeth (14) on its inner surface, such that all the elements of the mill are coupled together when they are assembled, leaving a clearance between the high-hardness rotating part (2) and the high-hardness stationary gear (3).

The plastic stationary part (4) advantageously has coupling means (12) on its inner surface for the suitable positioning on the neck of a container or vessel which preferably contains spices, which is not depicted in the figures attached to this specification.

## Claims

1. A mill (1) comprising at least the following elements:
- a plastic rotating part (1), provided with anchoring elements (11) arranged on its inner surface and support means (5) emerging from the inner central portion of the plastic rotating part (1);
- a high-hardness rotating part (2), provided with complementary support means (6), which rest on the support means (5) of the plastic rotating part (1) to prevent the rotation of one rotating part with respect to the other;
- a high-hardness stationary gear (3), provided with locking means (7) on its outer surface and a central cavity;
- a plastic stationary part (4), provided with complementary anchoring elements (10) located on its outer surface along which the anchoring elements (11) of the plastic rotating part (1) pass; the plastic stationary part (4) being provided with complementary locking means (8), which rest on the locking means (7) of the high-hardness stationary gear (3) to prevent the rotation of one element with respect to the other;
**characterized in that**
the high-hardness rotating part (2) has a plurality of teeth (13) on its outer surface whereas the high-hardness stationary gear (3) has a plurality of teeth (14) on its inner surface, such that the elements forming the mill are coupled together, leaving a clearance between the high-hardness rotating part (2) and the high-hardness stationary gear (3).

2. The mill according to claim 1, **characterized in that** the support means (5) arranged in the central portion of the plastic rotating part (1), and the complementary support means (6) arranged on the inner surface of the high-hardness rotating part (2) have an arrowhead-like configuration.

3. The mill according to claim 1, **characterized in that** the locking means (7) arranged on the outer surface of the high-hardness stationary gear (3), and the complementary locking means (8) of the plastic stationary part (4) have an arrowhead-like configuration.

4. The mill according to claim 3, **characterized in that** the high-hardness stationary gear (3) has a double stop (7') extending along the perimeter of its upper base.

5. The mill according to claim 1, **characterized in that** the high-hardness rotating part (2) rests on the plastic rotating part (1), being associated to one another by means of a stop (9) to prevent their separation.

6. The mill according to claim 1, **characterized in that** the anchoring elements (11) are made up of projections, whereas the complementary anchoring elements (10) are made up of guiding means.

7. The mill according to any of the preceding claims, **characterized in that** the high-hardness rotating part (2) and the high-hardness stationary gear (3) are formed by a ceramic material.

8. The mill according to any of the preceding claims, **characterized in that** the high-hardness rotating part (2) and the high-hardness stationary gear (3) are formed by methacrylate.

9. The mill according to any of the preceding claims, **characterized in that** the high-hardness rotating part (2) and the high-hardness stationary gear (3) are formed by polycarbonate.

10. The mill according to any of the preceding claims, **characterized in that** the high-hardness rotating part (2) and the high-hardness stationary gear (3) are formed by metal.

11. The mill according to claim 1, **characterized in that** the plastic stationary part (4) has coupling means (12) on its inner surface.
